Europäisches Patentamt

European Patent Office

Office européen des brevets

(19)

(11) Numéro de publication: **0 175 602**
**B1**

(12) **FASCICULE DE BREVET EUROPEEN**

(45) Date de publication du fascicule du brevet:
**17.11.88**

(51) Int. Cl.⁴: **B 60 R 19/18**

(21) Numéro de dépôt: **85401612.8**

(22) Date de dépôt: **07.08.85**

(54) **Pare-chocs à absorbeur d'énergie, pour véhicule automobile.**

(30) Priorité: **17.09.84 FR 8414213**

(43) Date de publication de la demande:
**26.03.86 Bulletin 86/13**

(45) Mention de la délivrance du brevet:
**17.11.88 Bulletin 88/46**

(84) Etats contractants désignés:
**DE GB IT**

(56) Documents cités:
**FR - A - 2 364 789**
**FR - A - 2 416 139**
**US - A - 4 061 384**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Groeninck, François, 23 rue d'Enghien, F-95600 Eaubonne (FR)**

(74) Mandataire: **Moncheny, Michel et al, c/o Cabinet Lavoix 2 Place d'Estienne d'Orves, F-75441 Paris Cedex 09 (FR)**

## Description

La présente invention est relative aux pare-chocs qui équipent les véhicules automobiles et qui sont munis d'absorbeurs de type alvéolaire. Le document FR-A-2 416 139 décrit un pare-chocs comportant une paroi externe à peu près verticale sétendant transversalement au véhicule à proximité d'un élément rigide de la structure du véhicule, chaque absorbeur interposé entre cette paroi et cet élément rigide étant réalisé en un matériau plastique et formé de plusieurs cloisons longitudinales délimitant des alvéoles longitudinaux et de cloisons inclinées s'étendant de part et d'autre d'une cloison longitudinale horizontale. (Dans ce contexte, les termes «longitudinal» et «transversal» désignent respectivement des directions parallèle et perpendiculaire à la direction longitudinale du véhicule).

Dans un tel agencement, lors d'un choc frontal tendant à rapprocher de l'élément rigide la paroi externe du pare-chocs, l'absorbeur s'écrase plus ou moins selon l'importance du choc. L'écrasement des cloisons longitudinales de l'absorbeur s'effectue de manière quelque peu aléatoire, d'où résulte souvent un déplacement et/ou une déformation de la paroi externe du pare-chocs tels qu'un rebord supérieur sensiblement horizontal de celui-ci se soulève et vient heurter et endommager un élément de carrosserie ou un organe du véhicule, tel qu'un projecteur, situé juste au-dessus du pare-chocs. Cet inconvénient est particulièrement notable sur les véhicules modernes où le rebord supérieur du pare-chocs est disposé très près dudit élément de carrosserie ou organe du véhicule pour des raisons d'aspect et d'aérodynamisme.

L'invention a pour but de pallier cet inconvénient en réalisant un pare-chocs à absorbeur d'énergie dont le rebord supérieur ne se soulève pas lors d'un choc ayant une composante frontale. Selon l'invention, cet absorbeur d'énergie comporte au moins une cloison inclinée qui s'étend entre les deux bords, respectivement extérieur et inférieur, et intérieur et supérieur de l'absorbeur.

Selon d'autres dispositions avantageuses de l'invention:

– Chaque absorbeur est formé d'un bloc à peu près parallélépipédique composé de plusieurs alvéoles longitudinaux superposés et juxtaposés, dont au moins certains débouchent à leurs deux extrémités et sont séparés en deux par ladite cloison inclinée.

– Au moins un des alvéoles longitudinaux est fermé à une seule de ses deux extrémités par une cloison verticale comportant un trou de passage d'une pièce de fixation.

– Les deux bords de l'absorbeur sont en appui respectivement contre une butée supérieure de l'élément rigide et contre une butée inférieure de la paroi externe du pare-chocs.

– Ladite butée supérieure est un rebord supérieur d'un élément rigide vertical de la structure du véhicule.

– Ladite butée inférieure est une portion transversale sensiblement horizontale du pare-chocs, joignant notamment deux portions superposées de ladite paroi externe.

Un exemple de réalisation d'un pare-chocs selon l'invention est décrit ci-après, avec référence aux dessins annexés parmi lesquels:

– La Fig. 1 est une vue simplifiée en perspective trois quarts arrière d'un véhicule équipé d'un tel pare-chocs;

– La Fig. 2 est une vue en coupe longitudinale au droit du pare-chocs;

– La Fig. 3 est une vue analogue à la Fig. 2 après un choc frontal;

– La Fig. 4 et 5 sont des vues en perspective mi-supérieure, mi-arrière, et mi-supérieure, mi-avant d'une pièce de pare-chocs;

– et les Fig. 6 et 7 sont des vues en coupe longitudinale de cette dernière pièce, respectivement suivant les lignes 6–6 et 7–7 de la Fig. 4.

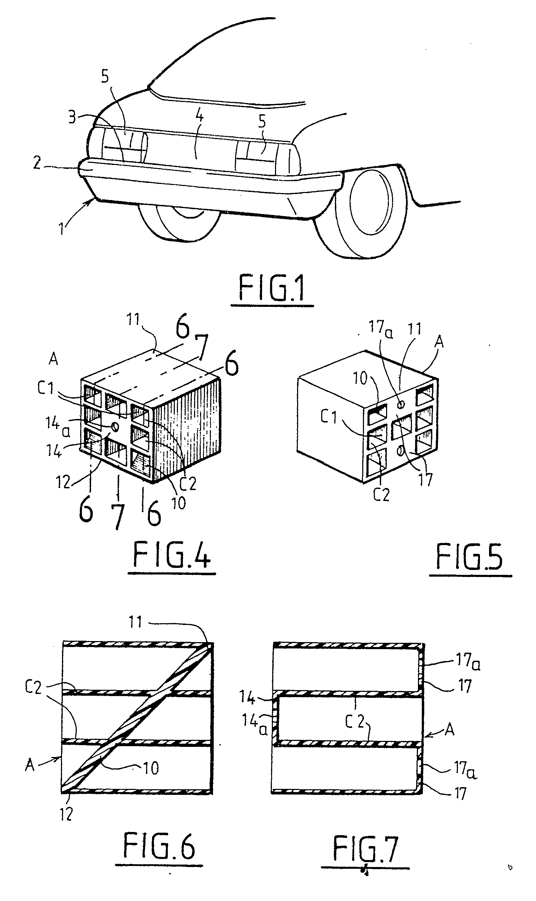

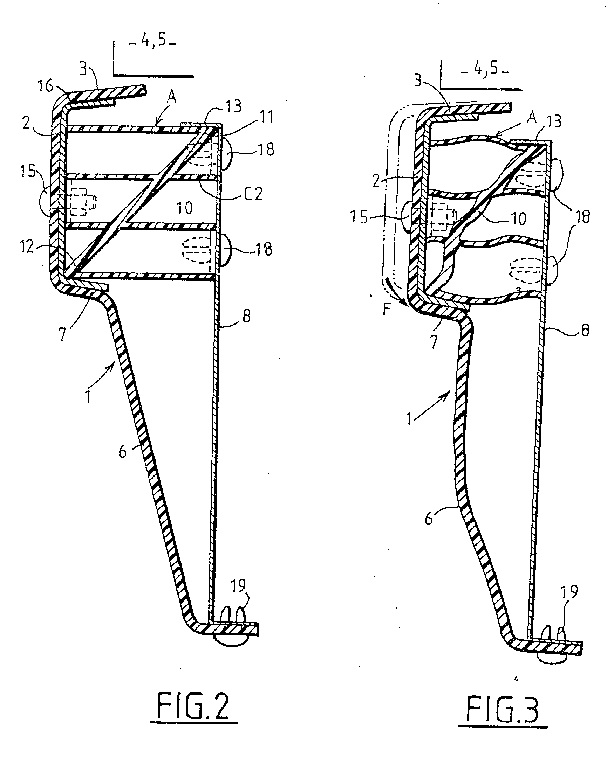

On voit sur la Fig. 1 la partie arrière d'un véhicule automobile équipé d'un pare-chocs 1 dont une paroi externe transversal 2 sensiblement verticale comporte un rebord supérieur horizontal 3 disposé juste au-dessous d'un panneau arrière 4 de la carrosserie du véhicule, et juste au-dessous de blocs de signalisation lumineuse 5. Comme visible à la Fig. 2, le rebord 3 est proche de ce panneau 4 et de ces blocs 5 mais ne les touche pas. Le pare-chocs comporte aussi une paroi inclinée inférieure 6 reliée à la paroi 2 par une portion sensiblement horizontale 7.

Entre la paroi 2 et un élément rigide 8 sensiblement vertical de la structure du véhicule, sont interposés deux absorbeurs d'énergie alvéolaires 2 en matière plastique, disposés approximativement au quart et aux trois quarts de l'étendue transversale du pare-chocs. Chaque absorbeur est de forme extérieure sensiblement cubique et composé de cloisons internes longitudinales verticales C1 et horizontales C2 délimitant 9 alvéoles longitudinaux superposés trois à trois.

Les alvéoles latéraux, superposés suivant les deux plans repéré 6–6 et visibles à la Fig. 6, débouchent à leurs deux extrémités et sont chacun séparé en deux par une cloison inclinée 10 relativement épaisse (par exemple ayant une épaisseur supérieure à celle des cloisons C1, C2) joignant l'extrémité supérieure avant (ou intérieure) 11 à l'extrémité inférieure arrière (ou extérieure) 12 de labsorbeur. Ces extrémités 11 et 12 sont respectivement appuyées vers le haut contre un rebord supérieur 13 de l'élément 8, et vers le bas contre la portion sensiblement horizontale 7.

Les alvéoles médians, superposés dans le plan repéré 7–7 et visible à la Fig. 7, ne débouchent qu'à l'une de leurs extrémités tandis que l'autre est fermée par une cloison verticale percée d'un trou: à l'arrière de l'alvéole central, un trou 14a ménagé dans une cloison 14 reçoit une vis 15 de fixation de l'absorbeur sur la paroi 2, avec interposition d'une armature métallique de renfort 16, et à l'avant de chacun des deux autres alvéoles, un trou 17 a ménage dans une cloison 17 reçoit une agrafe 18 de fixation du pare-chocs sur l'élément rigide 8, tandis que plusieurs agrafes 19 assurent la fixation inférieure du pare-chocs.

Quand un choc frontal relativement important tend à rapprocher de l'élément 8 la paroi externe 2, comme visible à la Fig. 3, chaque absorbeur s'écrase, avec déformation de ses cloisons longitudinales, et chaque cloison 10, en s'arcboutant entre le rebord 13 constituant une butée avant supérieure et la portion 7 constituant une butée arrière inférieure, se comporte comme un levier tendant à faire pivoter la paroi 2 vers le bas et vers l'avant (flèche F) autour d'un axe de pivotement fixe horizontal situé au niveau du rebord 13.

Par suite le rebord supérieur 3 du pare-chocs ne tend pas à se soulever et à s'approcher du panneau 4 ou des blocs 5 situés juste au-dessus. Ceux-ci ne risquent donc pas d'être endommagés.

En variante, plus de deux absorbeurs peuvent être disposés entre la paroi externe du pare-chocs et l'élément rigide de la structure; ou il est prévu un seul absorbeur de plus grande dimension transversale, le nombre d'alvéoles juxtaposés pouvant être bien supérieur à celui de l'exemple décrit. Un montage analogue peut par ailleurs être adapté à l'avant d'un véhicule.

L'absorbeur proposé, formé d'alvéoles longitudinaux, parallèles et débouchant à l'une au moins de leurs extrémités, présente de plus l'avantage d'être aisément réalisable par moulage.

## Revendications

1. Pare-chocs, notamment pour véhicule automobile, comprenant une paroi externe transversale (2) sensiblement verticale et au moins un absorbeur d'énergie (A) interposé entre cette paroi externe et un élément rigide (8) de la structure du véhicule, le ou chaque absorbeur (A) comportant des cloisons longitudinales ($C_1$, $C_2$), dont au moins certaines ($C_2$) sont horizontales, délimitant des alvéoles et au moins une cloison inclinée (10) dont la partie la plus haute se trouve du côté de l'extrémité de cet absorbeur destinée à être la plus proche de l'élément rigide (8) faisant partie de la structure du véhicule, caractérisé en ce que ladite cloison inclinée (10) s'étend entre les deux bords, respectivement extérieur et inférieur (12), et intérieur et supérieur (11) de l'absorbeur.

2. Pare-chocs suivant la revendication 1, caractérisé en ce que la cloison inclinée (10) est plus épaisse que les cloisons longitudinales ($C_1$, $C_2$).

3. Pare-chocs suivant l'une quelconque des revendications 1 et 2, caractérisé en ce que chaque absorbeur est formé d'un bloc à peu près parallélépipédique composé de plusieurs alvéoles longitudinaux superposés et juxtaposés, dont au moins certains débouchent à leurs deux extrémités et sont séparés en deux par ladite cloison inclinée (10);

4. Pare-chocs suivant la revendication 3, caractérisé en ce qu'au moins un des alvéoles longitudinaux est fermé à une seule de ses deux extrémités par une cloison verticale (14, 17) comportant un trou (14a, 17a) de passage d'une pièce de fixation.

5. Pare-chocs suivant la revendication 1, caractérisé en ce que les deux bords (11, 12) de l'absorbeur sont en appui respectivement contre une butée supérieure de l'élément rigide et contre une butée inférieure de la paroi externe du pare-chocs.

6. Pare-chocs suivant la revendication 5, caractérisé en ce que ladite butée supérieure est un rebord supérieur (13) d'un élément rigide vertical (8) de la structure du véhicule.

7. Pare-chocs suivant la revendication 5, caractérisé en ce que ladite butée inférieure est une portion transversale, sensiblement horizontale du pare-chocs, joignant notamment deux portions superposées (2, 6) de ladite paroi externe.

## Patentansprüche

1. Stossstange, insbesondere für ein Kraftfahrzeug, mit einer äusseren querverlaufenden Wand (2), die im wesentlichen vertikal verläuft, und wenigstens einem Energieabsorber (A), der zwischen dieser äusseren Wand und einem starren Element (8) der Karosserie des Fahrzeuges angeordnet ist, wobei der oder jeder Absorber (A) längsverlaufende Zwischenwände ($C_1$, $C_2$), von denen wenigstens eine schrägverlaufende Zwischenwand (10) aufweist, deren oberster Teil sich am äusseren Rand des Absorbers befindet, der dazu bestimmt ist, dem starren Element (8) am nächsten zu liegen, das einen Teil der Karosserie des Fahrzeuges bildet, dadurch gekennzeichnet, dass die schrägverlaufende Zwischenwand (10) sich zwischen den beiden Rändern, nämlich dem äusseren und unteren (12) und dem inneren und oberen (11) des Absorbers erstreckt.

2. Stossstange nach Anspruch 1, dadurch gekennzeichnet, dass die schrägverlaufende Zwischenwand (10) dicker als die längsverlaufenden Zwischenwände ($C_1$, $C_2$) ist.

3. Stossstange nach einem der Ansprüche 1 und 2, dadurch gekennzeichnet, dass jeder Absorber aus einem Block nahezu in Form eines Parallelepipeds aus einer Vielzahl von übereinander und nebeneinander angeordneten Längszellen besteht, von denen wenigstens einige an ihren beiden Enden offen sind und in zwei Teile durch die schrägverlaufende Zwischenwand (10) unterteilt sind.

4. Stossstange nach Anspruch 3, dadurch gekennzeichnet, dass wenigstens eine der Längszellen an einem der beiden Enden über eine vertikale Zwischenwand (14, 17) geschlossen ist, die ein Loch (14a, 17a) zum Durchführen eines Befestigungsteils aufweist.

5. Stossstange nach Anspruch 1, dadurch gekennzeichnet, dass die beiden Ränder (11, 12) des Absorbers jeweils an einer oberen Anschlagschiene des starren Elementes und an einer unteren Anschlagschiene der äusseren Wand der Stossstange anliegen.

6. Stossstange nach Anspruch 5, dadurch gekennzeichnet, dass die obere Anschlagschiene aus einem oberen umgebogenen Rand (13) des starren vertikalen Elementes (8) der Karosserie des Fahrzeuges besteht.

7. Stossstange nach Anspruch 5, dadurch gekennzeichnet, dass die untere Anschlagschiene ein quer und im wesentlichen horizontal verlaufender Teil der Stossstange ist, der insbesondere an zwei übereinanderliegende Teile (2, 6) der äusseren Wand angrenzt.

**Claims**

1. Bumper, particular for a car, having a substantially vertical outer, transverse wall (2) and at least one energy absorber (A) interposed between said outer wall and a rigid element (8) of the car structure, the or each absorber (A) having longitudinal partitions ($C_1$, $C_2$), whereof at least some ($C_2$) are horizontal and defining cavities and at least one inclined partition (10), whereof the highest part is on the side of the end of said absorber to be closest to the rigid element (8) forming part of the car structure, characterized in that said inclined partition (10) extends between two respectively outer and lower (12) and inner and upper (11) edges of the absorber.

2. Bunper according to claim 1, characterized in that the inclined partition (10) is thicker than the longitudinal partitions ($C_1$, $C_2$).

3. Bumper according to either of the claims 1 and 2, characterized in that each absorber is formed from a roughly parallelepipedic block constituted by several superimposed and juxtaposed, longitudinal cavities, whereof at least some issue at both ends and are subdivided into two by said inclined partition (10).

4. Bumper according to claim 3, characterized in that at least one of the longitudinal cavities is closed at one of its two ends by a vertical partition (14, 17) having a hole (14a, 17a) for the passage of a fixing part.

5. Bumper according to claim 1, characterized in that the two edges (11, 12) of the absorber respectively bear against an upper abutment of the rigid element and against a lower abutment of the outer wall of the bumper.

6. Bumper according to claim 5, characterized in that the upper bumper is an upper flange (13) of a vertical rigid element (8) of the car structure.

7. Bumper according to claim 5, characterized in that the lower bumper is a substantially horizontal, transverse portion of the bumper, more particularly joining two superimposed portions (2, 6) of said outer wall.

1/2

FIG.1

FIG.4

FIG.5

FIG.6

FIG.7

$2\Big/2$

FIG.2

FIG.3